(19) Europäisches Patentamt / European Patent Office / Office européen des brevets

(11) **EP 4 349 481 A1**

(12) **EUROPEAN PATENT APPLICATION**

(43) Date of publication:
   **10.04.2024 Bulletin 2024/15**

(21) Application number: **23184729.4**

(22) Date of filing: **11.07.2023**

(51) International Patent Classification (IPC):
   **B01J 23/888** (2006.01)    **B01J 29/67** (2006.01)
   **B01J 37/03** (2006.01)    **B01J 37/18** (2006.01)
   **C10G 45/60** (2006.01)

(52) Cooperative Patent Classification (CPC):
   (C-Sets available)
   **B01J 29/67; B01J 23/002; B01J 23/8885;**
   **B01J 37/031; B01J 37/18; C10G 45/60;**
   B01J 2235/30; B01J 2523/00          (Cont.)

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **KH MA MD TN**

(30) Priority: **07.10.2022 KR 20220128528**

(71) Applicants:
   • SK Innovation Co., Ltd.
    Seoul 03188 (KR)
   • SK Enmove Co., Ltd.
    Seoul 03188 (KR)

(72) Inventors:
   • **LEE, Seung Woo**
    34124 Daejeon (KR)
   • **KIM, Yeon Ho**
    34124 Daejeon (KR)
   • **LEE, Yoon Kyung**
    34124 Daejeon (KR)
   • **JEON, Hee Jung**
    34124 Daejeon (KR)

(74) Representative: **Frick, Robert**
   **Lorenz Seidler Gossel**
   **Rechtsanwälte Patentanwälte**
   **Partnerschaft mbB**
   **Widenmayerstraße 23**
   **80538 München (DE)**

(54) **CATALYST FOR SELECTIVE RING-OPENING REACTION AND METHOD OF USING SAME**

(57)    Proposed are an unsupported metallic catalyst for a selective ring-opening (SRO) reaction and a method of using the same catalyst, wherein the catalyst contains nickel (Ni), molybdenum (Mo), and tungsten (W).

**FIG.1**

| COMPOUND TYPE | STRUCTURE | VI | Pour | OXIDATION STABILITY | Toxicity |
|---|---|---|---|---|---|
| N-PARAFFIN (WAX) | | EXTREMELY HIGH ~175 | SOLID AT 50°C | EXCELLENT | LOW |
| BRANCHED-CHAIN ISOPARAFFIN | | HIGH ~150 | GOOD | EXCELLENT | LOW |
| HYPERBRANCHED-CHAIN ISOPARAFFIN (PAO) | | GOOD ~130 | GOOD | EXCELLENT | LOW |
| LONG-CHAIN MONOCYCLIC CYCLOPARAFFIN | | GOOD ~130 | GOOD | GOOD | LOW |
| POLYCONDENSED NAPHTHENE | | POOR ~60 | GOOD | MODERATE | LOW |
| LONG-CHAIN MONOAROMATIC COMPOUND | | POOR ~60 | GOOD | MODERATE | MODERATE |
| POLYAROMATIC COMPOUND | | EXTREMELY POOR <0 | GOOD | EXTREMELY POOR | EXTREMELY HIGH |

EP 4 349 481 A1

(52) Cooperative Patent Classification (CPC): (Cont.)

C-Sets
B01J 2523/00, B01J 2523/68, B01J 2523/69,
B01J 2523/847

**Description**

BACKGROUND OF THE DISCLOSURE

1. Field of the Disclosure

The present disclosure relates to a catalyst for selective ring-opening (SRO) reaction and a method of using the same. Particularly, the present disclosure relates to a unsupported trimetallic catalyst for SRO reaction and a method of using the same. More particularly, the present disclosure relates to an SRO reaction catalyst for use in a lube base oil production process, and to a method of using the catalyst in a lube base oil production process.

2. Description of the Related Art

A lube base oil is a raw material for lubricating oil products. Typically, good lube base oils have high viscosity index (VI), excellent stability (such as oxidation stability, heat stability, UV stability, etc.), and low volatility. The American Petroleum Institute (API) classifies lube base oils as shown in Table 1 below, according to qualities such as sulfur content, degree of saturation, and viscosity index (VI).

[Table 1]

| Classification | Sulfur content (%) | Degree of saturation (%) | Viscosity index (VI) |
|---|---|---|---|
| Group I | > 0.03 | < 90 | 80 ≤ VI < 120 |
| Group II | ≤ 0.03 | ≥ 90 | 80 ≤ VI < 120 |
| Group III | ≤ 0.03 | ≥ 90 | 120 ≤ VI |
| Group IV | All polyalphaolefins (PAOs) | | |
| Group V | All the other lube base oils not included in Group I, II, III, or IV | | |

The higher the group number in Table 1, the higher the quality of lube base oil. In addition, high-quality lube base oils tend to have low contents of sulfur and nitrogen, high VI, low pour point, low cold-cranking simulator (CCS) viscosity, and low Noack volatility. In addition, the higher the quality of lube base oil, the higher the paraffin content and the lower the contents of naphthene and an aromatic compound.

On the other hand, VI is one of the crucial physical properties for the evaluation of lube base oil quality. VI is an index related to a change in viscosity according to a change in temperature. The higher the VI, the smaller the change in viscosity according to the change in temperature. Hence, lube base oils with high VI are advantageous to engine protection due to a relatively high viscosity at high temperatures and to engine pump operation due to a relatively low viscosity at low temperatures. For this reason, lube base oils with high VI are evaluated as high-quality lube base oils. In addition, in the long run, market demand for lube base oil with a higher VI than that of Group III lube base oil, specifically, lube base oil with a VI of 130 or higher (hereinafter also referred to as Group III+ lube base oil in the present disclosure), is growing.

There are mainly two known methods of producing a lube base oil with a higher VI than that of Group III lube base oil, which are i) a method of producing a synthetic base oil (Group IV) using chemical raw materials, or ii) a method of producing a lube base oil through a structural isomerization process using a feed with high paraffin content as a starting material. However, in the case of i), the raw materials of the synthetic base oil are expensive compared to that of a mineral base oil. In addition, there is a problem in that the impacts on the market are low because the amount of available raw material is insufficient. In the case of ii), the oil with a high paraffin content, which can be used as the feed, is difficult to be obtained, so supply in large quantities is difficult.

SUMMARY OF THE INVENTION

The technical problem to be solved by the present invention is to provide a novel solution capable of supplying lube base oil with high viscosity index (VI) in large quantities.

Against this background, the invention relates to an unsupported metallic catalyst for a selective ring-opening (SRO) reaction, a method of improving a VI of a lube base oil using such catalyst of the first aspect, and a method of producing a lube base oil using such catalyst.

The unsupported metallic catalyst for a selective ring-opening (SRO) reaction, according to the invention, comprises nickel, molybdenum, and tungsten.

In one embodiment, the catalyst is in an activated state by having been in contact with hydrogen.

In one embodiment, the molar ratio ofNi, Mo and W in the catalyst satisfies the following conditions: 0.30 ≤ Ni / (Ni + Mo + W) ≤ 0.60; 0.05 ≤ Mo/(Ni + Mo + W) ≤ 0.25; and 0.25 ≤ W / (Ni + Mo + W) ≤ 0.55.

In one embodiment, the catalyst further comprises a promoter.

In one embodiment, the catalyst further comprises a promoter in an amount in a range of more than 0 wt% to 5 wt%.

In one embodiment, the catalyst further comprises phosphorus (P).

The method of improving a viscosity index (VI) of a lube base oil, according to the invention, comprises introducing a reactant into a selective ring-opening (SRO) reaction in the presence of hydrogen and a catalyst, where the catalyst is the catalyst according to the invention.

In one embodiment, the method further comprises pretreating the catalyst for activation of the catalyst.

In one embodiment, the reactant comprises a feedstock for production of the lube base oil; an intermediate oil produced during the production of the lube base oil; or the lube base oil.

In one embodiment, the SRO reaction is performed in the presence of hydrogen in a temperature range of 100°C to 450°C.

A method of producing a lube base oil, according to the invention, comprises: a) preparing a feedstock, b) introducing the feedstock into a selective ring-opening (SRO) reaction, and c) introducing an SRO reaction product produced by the step b), into a hydrodewaxing (HDW) reaction, where the SRO reaction is performed in the presence of hydrogen and the catalyst according to the invention.

In one embodiment, the method further comprises d) introducing an HDW reaction product produced by the step c), into a hydrofinishing (HDF) reaction.

In one embodiment, the method further comprises e) pretreating the catalyst for activation of the catalyst.

In one embodiment, the viscosity index (VI) of the lube base oil produced thereby is higher by a value of 1 or more than the VI of a lube base oil produced by a lube base oil production method not comprising the SRO reaction.

A wider range of feedstocks can be used with a catalyst of the present invention, and the production of lube base oils with a better viscosity index (VI) is thus enabled.

BRIEF DESCRIPTION OF THE DRAWINGS

FIG. 1 schematically shows properties of lube base oils according to types of chemicals constituting the lube base oil; and

FIGS. 2 to 4 show scanning electron microscope (SEM) images of catalysts for selective ring-opening (SRO) reactions according to examples of the present invention.

DESCRIPTION OF THE PREFERRED EMBODIMENTS

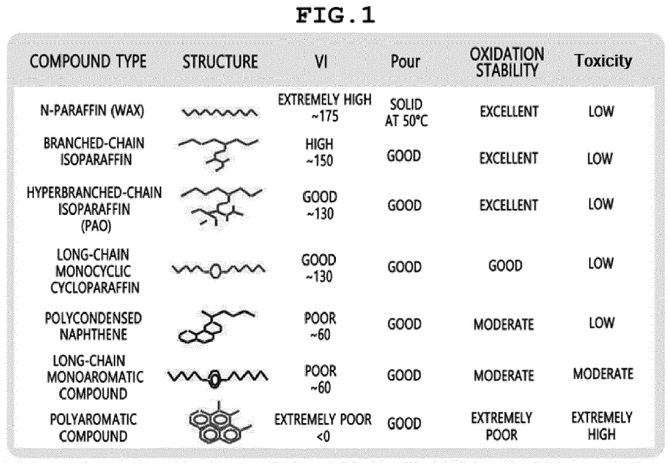

The aforementioned viscosity index (VI) is affected by the types of hydrocarbon compounds present in a lube base oil. Specifically, the VI of the lube base oil may vary depending on the contents of paraffin, naphthene, and an aromatic compound present in the lube base oil. Typically, it is widely known that the higher the content of the hydrocarbon compounds in the order of paraffin > naphthene > aromatic compound, the higher the VI. Properties of lube base oils according to types of chemicals are schematically shown in FIG. 1.

Referring to FIG. 1, as the first four types of compounds have excellent VI due to the high content of paraffin and low contents of naphthene and an aromatic compound, Group III+ lube base oils can be produced using these compounds as raw materials. However, as described above, the amounts of the first four types of compounds in FIG 1 obtained from crude oils are extremely limited.

The present disclosure provides a solution capable of increasing VI as well as producing Group III+ lube base oil by using not only the first four types of compounds but also the last three types of compounds as feedstocks for lube base oil production.

Catalyst for selective ring-opening (SRO) reaction

The present invention provides an unsupported metallic catalyst for SRO reaction capable of selectively and partially opening a compound ring in a feedstock for the production of the lube base oil. The SRO reaction allows rings of the naphthene or aromatic compound in the feedstock to be opened so that the naphthene or aromatic compound can be converted into branched paraffin. Through this, a lube base oil with a higher VI than that of an existing lube base oil can be obtained from the same feedstock.

In the present disclosure, "selective ring-opening" means preferably cracking a carbon-carbon bond constituting a ring compound in a hydrocarbon compound containing two or more multiple rings than cracking a carbon-carbon bond constituting a main chain and a carbon-carbon bond constituting a branched hydrocarbon connected to the ring compound. The ring-opening reaction of the present disclosure is to minimize the cracking of the carbon bonds constituting the main chain while maintaining the properties and yield of the lube base oil through the selective ring-opening of the carbon bonds constituting the ring compound.

The metallic catalyst for the SRO reaction, according to the present invention, comprises nickel (Ni), molybdenum (Mo), and tungsten (W). More specifically, the catalyst may comprises a nickel complex compound, molybdenum (Mo), and tungsten (W). When the catalyst is inactive, the catalyst may be present in a precipitate form of a metal compound. Specifically, the inactive catalyst may be present in a precipitate form in which metal compounds containing the respective metals are mixed. The precipitate may comprise metal oxides, metal hydroxides, and combinations thereof.

The catalyst of the present invention is one type of reduced catalyst. In the present disclosure, "reduced catalyst" refers to a catalyst capable of being activated through reduction by bringing the aforementioned inactive catalyst into contact with hydrogen. Hence, the reduced catalyst is distinguishable from a sulfide-based catalyst, i.e., a catalyst containing a metal sulfide or activated by being in contact with a sulfide.

The use of the sulfide-based catalyst in the production of the lube base oil is undesirable. Specifically, as described below, in a lube base oil production process, a hydrodewaxing (HDW) reaction is performed after the SRO reaction. A noble metal catalyst is typically used for the HDW reaction. When being in contact with an extremely small amount of sulfur in the ppm unit, the noble metal catalyst is poisoned, thereby rapidly deteriorating the activity thereof. Hence, in the lube base oil production process, in which the SRO reaction is performed before the HDW reaction, the use of the sulfide-based catalyst as an SRO reaction catalyst may reduce the yield of the lube base oil, which is undesirable. Unlike the sulfide-based catalyst, the reduced catalyst of the present invention does not contain sulfur. As a result, given that the poisoning of the noble metal catalyst for the HDW reaction as described above is unproblematic, the reduced catalyst of the present invention is particularly suitable for use in a lube base oil production process.

When using a sulfide-based catalyst in the lube base oil production process, an additional process of removing sulfur present in the feed would be required to be performed after the SRO reaction and before the HDW reaction. In addition, process conditions (such as temperature, pressure, and the like) for such a sulfur-removal process differ from reaction conditions for the SRO and HDW reactions. As a result, there is a problem in that temperature and pressure conditions are required to be adjusted after the sulfur removal process, resulting in additional costs. As described above, the use of the sulfide-based catalyst in the lube base oil production process inevitably incurs additional equipment investment costs and process operation costs, which is undesirable. On the other hand, when using the catalyst of the present invention, the additional process, as described above, is unnecessary. In addition, there is an advantage in that the loading configurations of the SRO reaction catalyst and the HDW reaction catalyst can be adjusted in a reactor so that the catalysts are used in one single reactor.

In one embodiment, the catalyst is in an activated state by having been in contact with hydrogen. The activated catalyst is not limited to a catalyst in which metals in a metal precipitate form are completely reduced to metal atoms. In other words, the activated catalyst does not require all metal compounds included in the catalyst to be reduced to metal atoms having an oxidation number of 0. The activated catalyst may be a catalyst in which the metal present in the metal precipitate form is partially reduced. That is to say, the activated catalyst may be a catalyst in which at least a portion of the metals included in the catalyst is reduced.

As descried above, the catalyst of the present invention contains nickel (Ni), molybdenum (Mo), and tungsten (W) as transition metals. These transition metals may be present in the catalyst in a specific composition ratio.

In one embodiment, the molar ratio of these metals in the catalyst satisfies the following conditions: $0.30 \leq Ni / (Ni + Mo + W) \leq 0.60$; $0.05 \leq Mo / (Ni + Mo + W) \leq 0.25$; and $0.25 \leq W / (Ni + Mo + W) \leq 0.55$.

Preferably, the molar ratio satisfies the following conditions: $0.32 \leq Ni / (Ni + Mo + W) \leq 0.58$; $0.07 \leq Mo / (Ni + Mo + W) \leq 0.20$; and $0.30 \leq W / (Ni + Mo + W) \leq 0.53$.

While not wishing to be bound by any particular theory, the metal components in the catalyst of the present invention may function as active sites for dehydration and hydrogenation reactions, and can thus promote the SRO reaction.

The catalyst of the present invention is unsupported. In the present disclosure, "unsupported catalyst" refers to a catalyst that does not have a seperate carrier. The unsupported catalyst is contrary to a supported catalyst that essentially has a carrier. In one embodiment, the catalyst may not have a carrier such as, for example, alumina, or silica.

Unsupported catalysts are more difficult to prepare than supported catalysts. In addition, it is difficult to modify a known supported catalyst to an unsupported catalyst by simply excluding a carrier. This is because when excluding any carrier from the supported catalyst, the agglomeration of metal components occurs. As a result, there is a problem in that a catalytic effect achievable with the use of the supported catalyst fails to be exhibited.

The catalyst of the present invention has a higher metal content and a better hydrogenation function than supported catalysts, and the preparation process may only be slightly more difficult compared to that of the existing supported catalysts. The catalyst of the present invention has an excellent effect on the SRO reaction.

In one embodiment, the catalyst further comprises a promoter. The promoter may serve as an acid catalyst that promotes isomerization, β-cleavage reactions, and the like. The promoter may contain phosphorus (P).

The catalyst may comprise the promoter in an amount in a range of more than 0 wt% to 5 wt% with respect to the total weight of the catalyst. The promoter is preferably included in an amount in the range of about 0.1 wt% to 5 wt%, more preferably in the range of about 0.1 wt% to 3 wt%, and even more preferably in the range of about 0.1 wt% to 2 wt%. When the promoter is included in an amount of less than 0.1 wt%, the promoter may fail to function due to the excessively small amount. On the contrary, when the promoter is included in an amount exceeding 5 wt%, undesirable side reactions, other than the SRO reaction, may occur.

The SRO reaction catalyst of the present invention may be used in a method as described below. An SRO reaction may be performed with the use of the catalyst of the present invention, thereby inhibiting a cracking reaction while increasing the selectivity of the ring-opening reaction. Accordingly, performing the SRO reaction with the use of the catalyst of the present invention enables the lube base oil, having superior VI to that of lube base oil produced by a lube base oil production method not involving the SRO reaction, to be obtained. In addition, unlike in the related art, in which the choice of feeds is limited in the production of the lube base oil with a high VI, flexibility in feed choice can be increased. Furthermore, the catalyst of the present invention and the following process using the same are additionally advantageous in that application to a currently available production process of lube base oils is easy.

Method of improving VI of lube base oil

The present invention also provides a method of improving a VI of a lube base oil with the use of the catalyst described above. The method comprises introducing a reactant into a selective ring-opening (SRO) reaction in the presence of hydrogen and an SRO reaction catalyst. The SRO reaction enables the content of ring compounds in the reactant, particularly multiple-ring compounds, to be reduced.

The method may be accompanied by a process of pretreating the catalyst for activation of the catalyst, before introducing the reactant into the SRO reaction. Hence, in one embodiment, the method may further comprise the pretreating of the catalyst for the activation of the catalyst. Alternatively, in another embodiment, the introducing of the reactant into the SRO reaction may further comprise the pretreating of the catalyst for the activation of the catalyst. The pretreating of the catalyst may be performed before bringing the reactant into contact with hydrogen and the catalyst. The pretreating of the catalyst may be performed by bringing the catalyst into contact with hydrogen so that at least a portion of the metals present in the catalyst can be reduced. For example, the pretreating of the catalyst and the SRO reaction may be sequentially performed by loading a reactor for the SRO reaction with the catalyst, supplying hydrogen to the reactor, and then supplying the reactant.

In one embodiment, the pretreating of the catalyst may comprise drying the catalyst and reducing the catalyst. Specifically, the reducing of the catalyst may be performed in a hydrogen atmosphere under conditions: a temperature in a range of about 250°C to about 350°C, a pressure in a range of about 1 atm to about 200 atm, and a duration of about 1 hour to about 24 hours.

In one embodiment, the reactant may comprise: a feedstock for production of the lube base oil, an intermediate oil produced during the production of the lube base oil; or the lube base oil. Preferably, the reactant is the feedstock for the production of the lube base oil or the intermediate oil produced during the production of the lube base oil. Most preferably, the reactant is the intermediate oil produced during the production of the lube base oil.

The intermediate oil means an oil produced by the feedstock for the production of the lube base oil having gone through at least one reactor to produce the lube base oil, which means the oil before being introduced into a hydrofinishing (HDF) reaction. For example, the intermediate oil may be an oil before or after being subjected to the HDW reaction. For the reasons described below regarding the following method of producing lube base oil, the intermediate oil is preferably the oil before being subjected to the HDW reaction.

In one embodiment, the reactant may be oil containing a cyclic hydrocarbon compound. The reactant may satisfy 5 wt% $\leq C_N + Ca < 100$ wt%, and preferably satisfies the following compositon: $C_P > 50$ wt% and 20 wt% $\leq C_N + C_A \leq 50$ wt%.

Here, $C_p$, $C_N$, and Ca mean the contents of paraffin, naphthene, and an aromatic compound, respectively. In the present disclosure, the $C_A$ of the reactant may be 5 wt% or less, and is preferably 1 wt% or less.

In one embodiment, the SRO reaction may be performed in the presence of hydrogen in a temperature range of about 100°C to 450°C. A temperature is preferably in the range of about 250°C to 410°C, more preferably in the range of about 300°C to 350°C, and even more preferably in the range of about 310°C to 340°C.

The reaction may be performed under conditions equivalent to those of conventional HDW reactions, except for the conditions regarding the catalyst and temperature. For example, the SRO reaction may be performed under conditions: a reaction pressure in a range of 30 kg/cm$^2$ to 200 kg/cm$^2$, a liquid hourly space velocity (LHSV) in a range of 0.1 hr$^{-1}$ to 3.0 hr$^{-1}$, and a volume ratio of hydrogen to the feedstock in a range of 150 Nm$^3$/m$^3$ to 2000 Nm$^3$/m$^3$.

In one embodiment, the VI of the lube base oil subjected to the aforementioned method may be higher by a value of 1 or more than the VI of a lube base oil not comprising the method. A difference between the VIs of the lube base oils is preferably 3 or more, and more preferably 5 or more.

Method of producing lube base oil

The present invention also provides a method of producing a lube base oil with the use of the catalyst described above. The method comprises: a) preparing a feedstock, b) introducing the feedstock into a selective ring-opening (SRO) reaction, and c) introducing an SRO reaction product produced by the introducing of the feedstock into the SRO reaction, into a hydrodewaxing (HDW) reaction. Here, the SRO reaction is performed in the presence of the aforementioned catalyst of the present disclosure and hydrogen.

The feedstock is not particularly limited as long as it can be used as a feedstock in a conventional lube base oil production process. The feedstock may rather comprise an oil containing a large number of ring compounds, which have been difficult to be used in a process of producing high-class lube base oils, such as conventional Group III or higher lube base oil.

In one embodiment, the feedstock may be an oil containing a cyclic hydrocarbon compound. The feedstock may satisfy 5 wt% $\leq C_N$ + Ca < 100 wt%, and preferably satisfies the following compositon: Cp > 50 wt% and 20 wt% $\leq C_N + C_A \leq$ 50 wt%. Here, $C_p$, $C_N$, and Ca mean the contents of paraffin, naphthene, and an aromatic compound, respectively. The $C_A$ of the reactant may be 5 wt% or less, and preferably 1 wt% or less.

The method comprises introducing the feedstock into the SRO reaction. SRO reaction conditions for the method of producing the lube base oil may be the same as in the SRO reaction conditions for the aforementioned method of improving the VI of the lube base oil.

The method may be accompanied by pretreating the catalyst for catalyst activation, before introducing the reactant into the SRO reaction. Hence, in one embodiment, the method may further comprise the pretreating of the catalyst for the catalyst activation. Alternatively, in another embodiment, the introducing of the feedstock into the SRO reaction may further comprise the pretreating of the catalyst for the catalyst activation. The pretreating of the catalyst may be performed before bringing the reactant into contact with hydrogen and the catalyst. The pretreating of the catalyst may be performed by bringing the catalyst into contact with hydrogen so that at least a portion of the metals present in the catalyst can be reduced. Details of the pretreating are the same as described above in the context of the inventive method of improving a viscosity index (VI) of a lube base oil.

In the present disclosure, a HDW reaction means a reaction in which wax components, such as *n*-paraffin, are isomerized to isoparaffin and thus removed. The HDW reaction may enable a pour point of the lube base oil to be improved so that the low-temperature performance of the lube base oil is controlled.

In the present disclosure, HDW reaction conditions may be the same as in conventional reaction conditions that are well-known in the art, and are not particularly limited. According to one embodiment of the present disclosure, the HDW reaction may be performed under conditions: a reaction temperature in a range of 250°C to 410°C, a reaction pressure in a range of 30 kg/cm$^2$ to 200 kg/cm$^2$, a liquid hourly space velocity (LHSV) in a range of 0.1 hr$^{-1}$ to 3.0 hr$^{-1}$, and a volume ratio of hydrogen to the feedstock in a range of 150 Nm$^3$/m$^3$ to 2000 Nm$^3$/m$^3$.

In addition, the catalyst available in a HDW process may comprise a carrier having an acid point selected from a molecular sieve, alumina, and silica-alumina, and at least one metal having a hydrogenation function selected from among groups 2, 6, 9, and 10 elements in the periodic table. Particularly, in groups 9 and 10 metals (i.e., group VIII), Co, Ni, Pt, and Pd are preferable. Among group 6 metal (i.e., group VIB), Mo and W are preferable. Types of carrier having the acid point comprise a molecular sieve, alumina, silica-alumina, and the like. Among these, the molecular sieve refers to crystalline aluminosilicate (zeolite), SAPO, ALPO, and the like. As the molecular sieve, medium pore molecular sieves containing 10-membered oxygen rings, such as SAPO-11, SAPO-41, ZSM-11, ZSM-22, ZSM-23, ZSM-35, ZSM-48, and the like, and large pore molecular sieves containing 12-membered oxygen rings may be used.

The method of producing the lube base oil, according to the present invention, is characterized in that the HDW reaction is performed after the SRO reaction. In other words, the method comprises the introducing of the SRO reaction product produced by the introducing of the feedstock into the SRO reaction, into the HDW reaction.

When performing the HDW reaction after the SRO reaction, rings of the hydrocarbon compounds may be first opened by the SRO reaction, so the VI is can be improved. In addition, chemical structures of the hydrocarbon compounds having relatively bulky multiple rings may be modified so that the following HDW reaction is facilitated. Hence, under the same conditions, synergistic effects of improving the low-temperature performance and yield of the resulting product can be obtained in the case where the HDW reaction is performed after the SRO reaction, compared to the case where the HDW reaction is performed without involving the SRO reaction. In other words, in the case of performing the HDW reaction after the SRO reaction, even when the HDW reaction is performed under more relaxed reaction conditions than those in conventional cases of performing the HDW reaction without involving the SRO reaction, the resulting product with the equivalent physical properties can be obtained.

On the contrary, under the assumption of performing the SRO reaction after the HDW reaction, the HDW reaction would be required to be performed under conditions equivalent to that in the conventional cases of performing the HDW reaction without involving the SRO reaction. In addition, when the SRO reaction would be subsequently performed for VI improvement, a problem in which the yield of the reaction product obtained through the additional reaction is reduced may occur. That is to say, unlike the case where the HDW reaction is performed after the SRO reaction, if the SRO reaction would be performed after the HDW reaction, a synergistic effect is difficult to be obtained.

In one embodiment, the production method may further comprise the introducing an HDW reaction product produced by the introducing of the SRO reaction product into the HDW reaction, into a hydrofinishing (HDF) reaction. Through the HDF reaction, olefins and residual polycyclic aromatic compounds in the oil may be removed, thereby securing stability.

In embodiments of the present invention, HDF reaction conditions may be the same as in conventional reaction conditions that are well-known in the art, and are not particularly limited. According to one embodiment, the HDF reaction may be performed under conditions: a temperature in a range of 150°C to 300°C, a pressure in a range of 30 kg/cm$^2$ to 200 kg/cm$^2$, a liquid hourly space velocity (LHSV) in a range of 0.1 hr$^{-1}$ to 3.0 hr$^{-1}$, and a volume ratio of hydrogen to the introduced oil in a range of 150 Nm$^3$/m$^3$ to 2000 Nm$^3$/m$^3$.

In addition, the catalyst available in the HDF reaction may be used by supporting a metal on a carrier. The metal comprises at least one metal having a hydrogenation function selected from among groups 6, 8, 9, 10, and 11 elements. Preferably, metal sulfide series of Ni-Mo, Co-Mo, and Ni-W, or noble metals, such as Pt and Pd, may be used. Furthermore, as the carrier of the catalyst available in the HDF reaction, silica, alumina, silica-alumina, titania, zirconia, or zeolite having a large surface area may be used. Preferably, alumina or silica-alumina may be used as the carrier.

In one embodiment, the production method may further comprise performing fractional distillation so that the lube base oils with desired quality can be classified, after the HDF reaction.

In one embodiment, the VI of the lube base oil produced by the method of producing the lube base oil may be higher by a value of 1 or more than the VI of a lube base oil produced by a conventional lube base oil production method not comprising the SRO reaction. A difference between the VIs is preferably three or more, and more preferably five or more.

Further details and advantages of the invention are explained in the following with reference to concrete working examples.

Example

1. Preparation of catalysts and verification of SRO reaction performance

(1) Preparation of catalysts

Solutions B and C were mixed, and Solution A was then added dropwise to the mixed solution of Solutions B and C. Next, an ammonia solution was added to the mixed solution of Solutions A to C to adjust the pH of the mixed solution to 7. Then, the mixed solution was double-boiled in a water bath at a temperature of 80°C for 4 hours, and the resulting solution was subjected to filtering, water-washing, vacuum-drying, and oven-drying at a temperature of 120°C to obtain unsupported reduced transition metal oxide catalysts (Preparation Examples 1 to 3). Compositions of Solutions A to C are shown in Table 2 below.

[Table 2]

| | Solution A | Solution B | Solution C |
|---|---|---|---|
| Preparation Example 1 | 38 g of DI water + 3.24 g of ammonium molybdate tetrahydrate + 13.9 g of ammonium metatungstate hydrate | 100 g of DI water + 35 g of nickel nitrate hexahydrate | 4.6 g of DI water + 1.85 g of maleic acid |
| Preparation Example 2 | | | 4.6 g of DI water + 7.23 g of ethylenediamine |
| Preparation Example 3 | | | 4.6 g of DI water + 7.47 g of ethylene glycol |

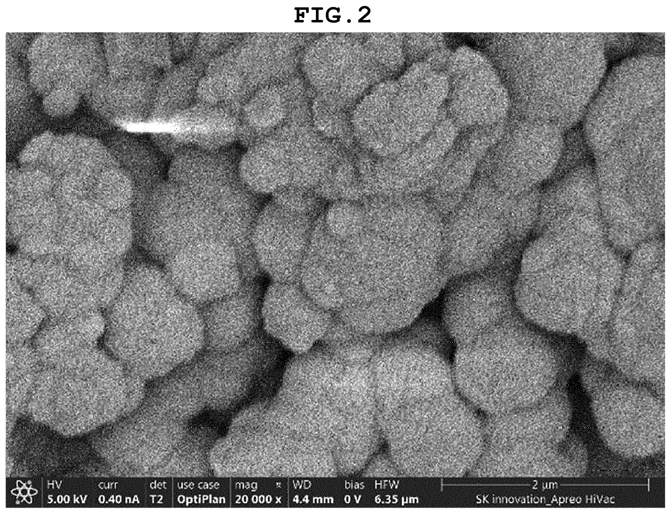

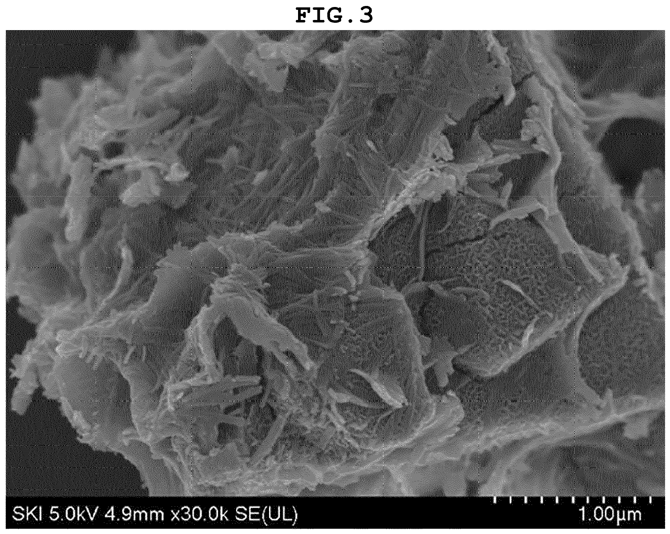

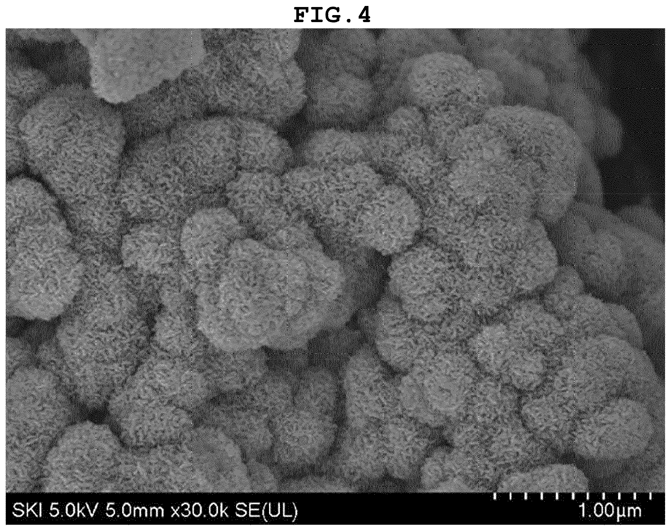

Compositions of the prepared catalysts are shown in Table 3 below. Scanning electron microscope (SEM) images of Preparation Examples 1 to 3 are shown in FIGS. 2 to 4, respectively. As seen in FIGS. 2 to 4, metal components were uniformly distributed throughout the catalyst. In addition, solid particles with an overall uniform shape and size were obtained.

[Table 3]

| (Based on transition metals, mol%) | Preparation Example 1 | Preparation Example 2 | Preparation Example 3 |
|---|---|---|---|
| Mo | 12.0 | 14.9 | 11.1 |
| W | 37.8 | 51.1 | 32.8 |
| Ni | 50.2 | 34 | 56.1 |

(2) Verification of SRO reaction performance

Lab-scale experiments were conducted using decalin to simulate naphthene ring-opening reactions. Hydrogen was first supplied to a reactor loaded with the catalyst, and decalin was then supplied thereto. The reaction was performed under conditions: a reaction temperature of 350°C, a reaction pressure of 30 bar, a liquid hourly space velocity (LHSV) of 1.7 hr$^{-1}$, and a gas-to-oil ratio (GOR) of 1000 nm$^3$/kL. The gas chromatography (GC) analysis results for the resulting products are shown in Table 4 below.

[Table 4]

| (wt%) | Preparation Example 1 | Preparation Example 2 | Preparation Example 3 |
|---|---|---|---|
| Cracking | 1.7 | 1.8 | 0.7 |
| Ring-opening | 21.3 | 43.7 | 26.6 |
| Decalin | 72.9 | 47.4 | 68.7 |
| Isodecalin | 1.5 | 2.5 | 1.8 |
| Heavy | 2.5 | 4.5 | 2.1 |

In Table 4, components of "Cracking" have 9 or fewer carbon atoms, and components of "Heavy" have 11 or more carbon atoms. Components of "Ring-opening" contain an opened ring and have 10 carbon atoms, which have more hydrogen atoms than decalin. In "Ring-opening", both a component in which one ring is opened and a component in which two rings are opened are included.

From Table 4, it was seen that using the catalyst of the present disclosure, the cracking reactions were able to be inhibited while meaningfully increasing the selectivity of the ring-opening reactions.

2. Confirmation of change in VI of base oil product according to use of catalyst

Two types of feed were used to conduct experiments. Feed properties are shown in Table 5 below. Each type of feed was supplied to a selective ring-opening (SRO) reactor and/or hydrodewaxing (HDW) reactor in the following experiments. The aforementioned catalyst of Preparation Example 2 was used as a catalyst for an SRO reaction. A Pt/EU-2 zeolite catalyst was used as a catalyst for an HDW reaction.

[Table 5]

| Feed | 150D | 100D |
|---|---|---|
| Specific gravity (60/60°F) | 0.8433 | 0.8403 |
| Kinematic viscosity (cSt) | 13.27 (at 70°C) | 17.63 (at 40°C) |
| Kinematic viscosity (at 100°C, cSt) | 6.592 | 4.024 |
| VI | 142 | 129 |

(1) Confirmation of change in VI of oil base product according to HDW-only reaction

100D, used as the feed, was supplied to the HDW reactor. The HDW reaction was performed under conditions: a reaction pressure of 180 kg/cm$^2$, an LHSV of 1.7 hr$^{-1}$, and a GOR of 1783 nm$^3$/kL. The experimental results according to reaction temperatures are shown in Table 6 below.

The following analysis methods (ASTM methods) were used to analyze the experimental results.

API: ASTM D1298
Kinematic Viscosity: ASTM D445
VI: ASTMD2270
Pour Point: ASTM D97
cloud Point: ASTM D2500
Simulated Distillation: ASTM D2887

The same analysis apparatus and methods were also used for analyzing the following experimental results.

[Table 6]

| No. | | 1 | 2 | 3 | 4 | |
|---|---|---|---|---|---|---|
| Reaction | | HDW | | | | |
| Reaction temperature (°C) | | 329 | 323 | 329 | 332 | |
| LHSV (hr-1) | | 1.7 | 1.2 | 1.2 | 1.2 | |
| Distillation analysis (wt%) | Gas | 0.44 | 0.47 | 0.67 | 0.83 | |
| | IBP* to 180 (°C) | 2.24 | 2.43 | 3.41 | 4.83 | |
| | 180 to 250 (°C) | 1.55 | 1.30 | 2.63 | 2.95 | |
| | 250 to 350 (°C) | 3.99 | 4.39 | 3.85 | 4.69 | |
| | 350 or higher (°C) | 91.78 | 91.41 | 89.44 | 86.70 | |
| Density (g/cm$^3$) | | | 0.8368 | 0.8367 | 0.8375 | 0.8378 |
| Kinematic viscosity (at 40°C, cSt) | | | 18.8 | 18.8 | 19.12 | 19.1 |
| Kinematic viscosity (at 100°C, cSt) | | | 4.095 | 4.098 | 4.104 | 4.08 |
| VI | | | 119 | 119 | 116 | 114 |
| VI_normalized* | | | 120.05 | 120.02 | 116.96 | 115.2 |
| Pour point/ cloud point (°C) | | | -18/-15 | -19/-14 | -28/-25 | -33/-32 |
| *IBP (Initial Boiling Point) *Normalized based on the kinematic viscosity of 4.2 cSt at a temperature of 100°C | | | | | | |

In Table 6, all properties from density to pour point/ cloud point correspond to the properties of fractions having a boiling point of 350°C or higher among the distilled resulting product. In the above experiment, the fractions having a boiling point of 350°C or higher correspond to the lube base oil product obtained through the reactions. In other words, the content of the fractions having a boiling point of 350°C or higher in Table 6 corresponds to the base oil product yield.

Looking into Table 6, it was seen that when the reaction conditions became severe, the conversion rate of n-paraffin being converted into isoparaffin was increased (i.e., the pour point was lowered, so the low-temperature performance was improved). However, an effect of improving VI was not exhibited, and base oil product yield was reduced. In other words, when performing only the HDW reaction, an increase in conversion rate affects the improvement of low-temperature performance, but hardly affects the improvement of VI.

(2) Confirmation of change in VI of base oil product according to SRO-HDW reactions

1) In case of using 150D as feed

The feed was supplied to the SRO reactor and/or HDW reactor. The SRO and HDW reactions were performed under conditions: a reaction pressure of 180 kg/cm$^2$, an LHSV of 1.7 hr$^{-1}$, and a GOR of 1783 nm$^3$/kL. The experimental results according to reaction temperatures are shown in Tables 7 and 8 below.

[Table 7]

| No. | | 1 | 2 | 3 | 4 | 5 |
|---|---|---|---|---|---|---|
| Reaction | R1 | - | SRO | | | |
| | R2 | HDW | HDW | | | |
| Reaction temperature (°C) | R1 | - | 340 | 330 | 320 | 300 |
| | R2 | 337 | 332 | 331 | 330 | 330 |
| Distillation analysis (wt%) | Gas | 0.73 | 1.41 | 0.59 | 0.67 | 0.66 |
| | IBP to 180 (°C) | 3.97 | 2.91 | 2.91 | 2.88 | 3.23 |
| | 180 to 250 (°C) | 2.63 | 3.18 | 2.78 | 2.49 | 2.51 |
| | 250 to 310 (°C) | 2.32 | 3.88 | 2.65 | 2.65 | 2.59 |
| | 310 or higher (°C) | 90.35 | 88.62 | 91.07 | 91.31 | 91.00 |
| Density (g/cm$^3$) | | 0.8443 | 0.8394 | 0.8412 | 0.8420 | 0.8432 |
| Kinematic viscosity (at 40°C, cSt) | | 38 | 32.83 | 34.71 | 35.71 | 37.15 |
| Kinematic viscosity (at 100°C, cSt) | | 6.58 | 6.035 | 6.265 | 6.362 | 6.512 |
| VI | | 128 | 132 | 131 | 130 | 129 |
| Pour point/ cloud point (°C) | | -19/-15 | -18/-14 | -16/-14 | -17/-12 | -18/-15 |

In Table 7, all properties from density to pour point/ cloud point correspond to the properties of fractions having a boiling point of 310°C or higher among the distilled resulting product. In the above experiment, the fractions having a boiling point of 310°C or higher correspond to the lube base oil product obtained through the reactions. In other words, the content of the fractions having a boiling point of 310°C or higher in Table 7 corresponds to the base oil product yield.

[Table 8]

| No. | | 1 | 2 | 3 | 4 | 5 |
|---|---|---|---|---|---|---|
| Reaction | R1 | - | SRO | | | |
| | R2 | HDW | HDW | | | |
| Reaction temperature (°C) | R1 | - | 340 | 330 | 320 | 300 |
| | R2 | 337 | 332 | 331 | 330 | 330 |
| Base oil product yield (wt%) | | 90.35 | 88.62 | 91.07 | 91.31 | 91.00 |
| Composition (wt%) | Isoparaffin | 51.09 | 57.06 | 53.9 | 53.3 | 50.3 |
| | Total N* | 48.91 | 42.94 | 46.1 | 46.7 | 49.6 |
| | 1 ring N | 34.57 | 32.83 | 33.9 | 34 | 34.3 |
| | 2+ Ring N | 14.34 | 10.11 | 12.1 | 12.7 | 15.3 |
| | 2 Ring N | 8.03 | 6.41 | 7.5 | 7.7 | 8.8 |
| | 3 Ring N | 3.98 | 2.7 | 3.3 | 3.5 | 4.4 |
| | 4 Ring N | 2.11 | 0.92 | 1.3 | 1.5 | 2.1 |
| | 5 Ring N | 0.23 | 0.07 | 0 | 0 | 0 |
| *N in Table 8 means Naphthene. | | | | | | |

The composition analysis in Table 8 was performed using GC-FID 7890 manufactured by Agilent Technology and a thermal modulator manufactured by Zoex Corporation.

Looking into Tables 7 and 8, from the comparison of experiment No. 1 and experiments No. 2 to 4, it was seen that the content of isoparaffin was increased while the total content of naphthene was decreased by performing the SRO reaction before the HDW reaction. In addition, it was seen that when performing the SRO reaction before the HDW reaction under relaxed HDW reaction conditions, an equivalent level of the base oil product yield and further high VI were simultaneously achievable, compared to the case where only the HDW reaction was performed.

While not wishing to be bound by any particular theory, performing the SRO reaction before the HDW reaction enables chemical structures of hydrocarbon compounds in the reactant, supplied to the HDW reactor, to be changed. Thus, under the similar conditions, HDW reaction activity is further increased. For this reason, in the method of the present invention, the HDW reaction is believed to be performable under further relaxed reaction conditions to achieve a similar level of low-temperature performance.

On the other hand, from the comparison of experiments No. 1 and 5, it was confirmed that even when performing the SRO reaction before the HDW reaction, a synergistic effect obtained by sequentially performing the SRO and HDW reactions was difficult to be exhibited with insufficient SRO reaction activity.

As a result, when performing the method of the present invention, the reaction temperature can be appropriately controlled so that improvement in VI, as well as low-temperature performance, can be realized under more relaxed reaction conditions than that in conventional technology in which only the HDW is performed.

2) In case of using 100D as feed

The feed was supplied to the SRO reactor and/or HDW reactor. The SRO and HDW reactions were performed under conditions: a reaction pressure of 180 kg/cm$^2$, an LHSV of 1.7 hr$^{-1}$, and a GOR of 1783 nm$^3$/kL. The experimental results according to reaction temperatures are shown in Table 9 below.

[Table 9]

| No. | | 1 | 2 |
|---|---|---|---|
| Reaction | R1 | SRO | |
| | R2 | HDW | |
| Reaction temperature (°C) | R1 | 320 | 340 |
| | R2 | 323 | 320 |
| Distillation analysis (wt%) | Gas | 0.48 | 0.48 |
| | IBP to 180 (°C) | 2.10 | 2.94 |
| | 180 to 250 (°C) | 1.87 | 2.71 |
| | 250 to 350 (°C) | 3.57 | 6.48 |
| | 350 or higher (°C) | 91.97 | 87.38 |
| Density (g/cm$^3$) | | 0.8350 | 0.8325 |
| Kinematic viscosity (at 40°C, cSt) | | 18.08 | 17.24 |
| Kinematic viscosity (at 100°C, cSt) | | 4.006 | 3.974 |
| VI | | 120 | 127 |
| VI_normalized | | 121.94 | 129.26 |
| Pour point/ cloud point(°C) | | -20/ -15 | -16/ -11 |

In Table 9, all properties from density to pour point/ cloud point correspond to the properties of fractions having a boiling point of 350°C or higher among the distilled resulting product. In the above experiment, the fractions having a boiling point of 350°C or higher correspond to the lube base oil product obtained through the reactions. In other words, the content of the fractions having a boiling point of 350°C or higher in Table 9 corresponds to the base oil product yield.

When comparing Tables 6 and 9 and looking into the results thereof, even though the HDW reaction conditions became severe in Table 6, the effect of improving the VI failed to be exhibited. On the contrary, it was seen that as the SRO reaction conditions became severe in Table 9, the effect of improving the VI was significantly exhibited.

(3) Confirmation of change in VI of base oil product according to HDW-SRO reactions

100D, used as the feed, was supplied to the HDW reactor and/or SRO reactor. The HDW and SRO reactions were performed under conditions: a reaction pressure of 180 kg/cm$^2$, an LHSV of 1.7 hr$^{-1}$, and a GOR of 1783 nm$^3$/kL. The experimental results according to reaction temperatures are shown in Table 10 below.

[Table 10]

| No. | | 1 | 2 |
|---|---|---|---|
| Reaction | R1 | HDW | HDW |
| | R2 | - | SRO |
| Reaction temperature (°C) | R1 | 329 | 323 |
| | R2 | - | 360 |
| Distillation analysis (wt%) | Gas | 0.44 | 2.06 |
| | IBPto 180 (°C) | 2.24 | 6.17 |
| | 180 to 250 (°C) | 1.55 | 5.51 |
| | 250 to 350 (°C) | 3.99 | 19.27 |
| | 350 or higher (°C) | 91.78 | 66.99 |
| Density (g/cm$^3$) | | 0.8368 | 0.8272 |
| Kinematic viscosity (at 40°C, cSt) | | 18.8 | 15.48 |
| Kinematic viscosity (at 100°C, cSt) | | 4.095 | 3.642 |
| VI | | 119 | 121 |
| VI_normalized | | 120.05 | 126.58 |
| Pour point/ cloud point (°C) | | -18/ -15 | -13/ -6 |

In Table 10, all properties from density to pour point/ cloud point correspond to the properties of fractions having a boiling point of 350°C or higher among the distilled resulting product. In the above experiment, the fractions having a boiling point of 350°C or higher correspond to the lube base oil product obtained through the reactions. In other words, the content of the fractions having a boiling point of 350°C or higher in Table 10 corresponds to the base oil product yield.
Looking into Table 10, it was seen that experiment No. 2, in which an HDW temperature condition was relaxed compared to experiment No. 1, required a considerably severe SRO temperature condition to achieve a low-temperature performance not inferior to that in experiment No. 1. Such requirement of the severe SRO reaction condition was accompanied by excessive cracking reactions as side reactions, leading to a decrease in the base oil product yield. Through the experiment, unlike the case where the HDW reaction was performed after the SRO reaction, it was seen that in the case where the SRO reaction was performed after the HDW reaction, a synergistic effect of the two reactions was difficult to be exhibited. Particularly, in the method of producing the lube base oil using the SRO reaction catalyst of the present invention, it was seen that performing the HDW reaction after the SRO reaction was further preferable given that excellent VI and low-temperature performance were simultaneously achievable.

**Claims**

1. An unsupported metallic catalyst for a selective ring-opening (SRO) reaction, the catalyst comprising:

   nickel (Ni);
   molybdenum (Mo); and
   tungsten (W).

2. The catalyst of claim 1, wherein the catalyst is in an activated state by having been in contact with hydrogen.

3. The catalyst of any preceding claim, wherein the molar ratio of Ni, Mo and W in the catalyst satisfies the following conditions:

$$0.30 \leq Ni / (Ni + Mo + W) \leq 0.60;$$

$$0.05 \leq Mo / (Ni + Mo + W) \leq 0.25;$$

and

$$0.25 \leq W / (Ni + Mo + W) \leq 0.55.$$

4. The catalyst of any preceding claim, further comprising a promoter.

5. The catalyst of claim 4, further comprising a promoter in an amount in a range of more than 0 wt% to 5 wt%.

6. The catalyst of any preceding claim, further comprising phosphorus (P).

7. A method of improving a viscosity index (VI) of a lube base oil, the method comprising introducing a reactant into a selective ring-opening (SRO) reaction in the presence of hydrogen and a catalyst, wherein the catalyst is the catalyst of any preceding claim.

8. The method of claim 7, further comprising pretreating the catalyst for activation of the catalyst.

9. The method of claim 7 or 8, wherein the reactant comprises:

   a feedstock for production of the lube base oil;
   an intermediate oil produced during the production of the lube base oil; or
   the lube base oil.

10. The method of any one of claims 7 to 9, wherein the SRO reaction is performed in the presence of hydrogen in a temperature range of 100°C to 450°C.

11. A method of producing a lube base oil, the method comprising:

    a) preparing a feedstock;
    b) introducing the feedstock into a selective ring-opening (SRO) reaction; and
    c) introducing an SRO reaction product produced by the step b), into a hydrodewaxing (HDW) reaction,

    wherein the SRO reaction is performed in the presence of the catalyst of any one of claims 1 to 6 and hydrogen.

12. The method of claim 11, further comprising d) introducing an HDW reaction product produced by the step c), into a hydrofinishing (HDF) reaction.

13. The method of claim 11 or 12, further comprising e) pretreating the catalyst for activation of the catalyst.

14. The method of any one of claims 11 to 13, wherein the viscosity index (VI) of the lube base oil produced thereby is higher by a value of 1 or more than the VI of a lube base oil produced by a lube base oil production method not comprising the SRO reaction.

## FIG.1

| COMPOUND TYPE | STRUCTURE | VI | Pour | OXIDATION STABILITY | Toxicity |
|---|---|---|---|---|---|
| N-PARAFFIN (WAX) | | EXTREMELY HIGH ~175 | SOLID AT 50°C | EXCELLENT | LOW |
| BRANCHED-CHAIN ISOPARAFFIN | | HIGH ~150 | GOOD | EXCELLENT | LOW |
| HYPERBRANCHED-CHAIN ISOPARAFFIN (PAO) | | GOOD ~130 | GOOD | EXCELLENT | LOW |
| LONG-CHAIN MONOCYCLIC CYCLOPARAFFIN | | GOOD ~130 | GOOD | GOOD | LOW |
| POLYCONDENSED NAPHTHENE | | POOR ~60 | GOOD | MODERATE | LOW |
| LONG-CHAIN MONOAROMATIC COMPOUND | | POOR ~60 | GOOD | MODERATE | MODERATE |
| POLYAROMATIC COMPOUND | | EXTREMELY POOR <0 | GOOD | EXTREMELY POOR | EXTREMELY HIGH |

FIG.2

FIG.3

SKI 5.0kV 4.9mm x30.0k SE(UL)                    1.00μm

## FIG.4

SKI 5.0kV 5.0mm x30.0k SE(UL)    1.00μm

Europäisches
Patentamt

European
Patent Office

Office européen
des brevets

# EUROPEAN SEARCH REPORT

Application Number

EP 23 18 4729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 545 053 B1 (CHEVRON USA INC [US]) 7 July 2021 (2021-07-07) | 1-10 | INV. B01J23/888 |
| Y | * Reference Example 1; paragraphs [0008], [0034], [0073], [0079] - [0083], [0089] - [0092]; example 6 * | 11-14 | B01J29/67 B01J37/03 B01J37/18 C10G45/60 |
| X | US 2009/114566 A1 (CHEN CONG-YAN [US] ET AL) 7 May 2009 (2009-05-07) | 1-10 | |
| Y | * paragraphs [0035], [0127], [0134], [0135]; claim 12; examples 1,5; table 2 * | 11-14 | |
| X | US 2021/339232 A1 (OUYANG XIAOYING [US] ET AL) 4 November 2021 (2021-11-04) | 1-10 | |
| Y | * paragraphs [0006], [0086] - [0089], [0108] - [0111]; examples 1,8; table 2 * | 11-14 | |
| Y | EP 3 708 639 A1 (SK INNOVATION CO LTD [KR]; SK LUBRICANTS CO LTD [KR]) 16 September 2020 (2020-09-16) * paragraphs [0028], [0029], [0037], [0038]; figure 2 * * paragraphs [0053], [0054] * | 11-14 | TECHNICAL FIELDS SEARCHED (IPC) B01J C10G |
| Y | EP 2 085 360 A1 (CHEVRON USA INC [US]) 5 August 2009 (2009-08-05) * paragraphs [0052], [0085], [0089] * * paragraph [0092] * | 11-14 | |

The present search report has been drawn up for all claims

| Place of search | Date of completion of the search | Examiner |
|---|---|---|
| Munich | 23 February 2024 | Beckmann, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 4729**

**23-02-2024**

| Patent document cited in search report | | Publication date | Patent family member(s) | | Publication date |
|---|---|---|---|---|---|
| EP 3545053 | B1 | 07-07-2021 | CN | 109844071 A | 04-06-2019 |
| | | | EP | 3545053 A1 | 02-10-2019 |
| | | | JP | 6841912 B2 | 10-03-2021 |
| | | | JP | 2020502290 A | 23-01-2020 |
| | | | KR | 20190087480 A | 24-07-2019 |
| | | | US | 9919987 B1 | 20-03-2018 |
| | | | WO | 2018098028 A1 | 31-05-2018 |
| US 2009114566 | A1 | 07-05-2009 | NONE | | |
| US 2021339232 | A1 | 04-11-2021 | CA | 3181039 A1 | 11-11-2021 |
| | | | CN | 115605290 A | 13-01-2023 |
| | | | EP | 4146389 A1 | 15-03-2023 |
| | | | JP | 2023524743 A | 13-06-2023 |
| | | | KR | 20230005930 A | 10-01-2023 |
| | | | US | 2021339232 A1 | 04-11-2021 |
| | | | US | 2023347324 A1 | 02-11-2023 |
| | | | WO | 2021224692 A1 | 11-11-2021 |
| EP 3708639 | A1 | 16-09-2020 | EP | 3708639 A1 | 16-09-2020 |
| | | | JP | 2020147741 A | 17-09-2020 |
| | | | KR | 102053871 B1 | 09-12-2019 |
| | | | US | 2020291321 A1 | 17-09-2020 |
| EP 2085360 | A1 | 05-08-2009 | NONE | | |

EPO FORM P0459